# EUROPEAN PATENT APPLICATION

(11) **EP 2 487 140 A1**
(43) Date of publication of application: **15.08.2012**
(21) Application number: 10821840.5
(22) Date of filing: 15.09.2010
(51) Int. Cl.: C03C 27/12

(54) **PROCESS FOR PRODUCTION OF LAMINATED GLASS**

(30) Priority: 08.10.2009 JP 2009234525
(71) Applicant: Nippon Sheet Glass Company, Limited, Tokyo 108-6321 (JP)
(72) Inventor: YAMADA, Kazuo, Tokyo 108-6321 (JP); MYL, Lukasz, Sandomierz 27600 (PL)
(74) Representative: Strobel, Wolfgang
(86) International application number: PCT/JP2010/065954
(87) International publication number: WO 2011/043169

(57) **Abstract**

Disclosed is a process for producing a laminated glass, which can prevent the formation of air bubbles in a peripheral part of the laminated glass. In the process, a substance (17) which contains a polyalkylene glycol in the structure thereof is applied on a peripheral edge surface of a laminate (14) which comprises at least two glass plates (11, 13) and a polyvinyl butyral film (12) intercalated between the glass plates, and the laminate (14) is subsequently heated and pressurized in an autoclave (21).

## Description

### TECHENICAL FIELD

The present invention relates to a technique of manufacturing laminated glass pane having at least two sheets of glass bonded together with an intermediate film interposed therebetween.

### BACKGROUND ART

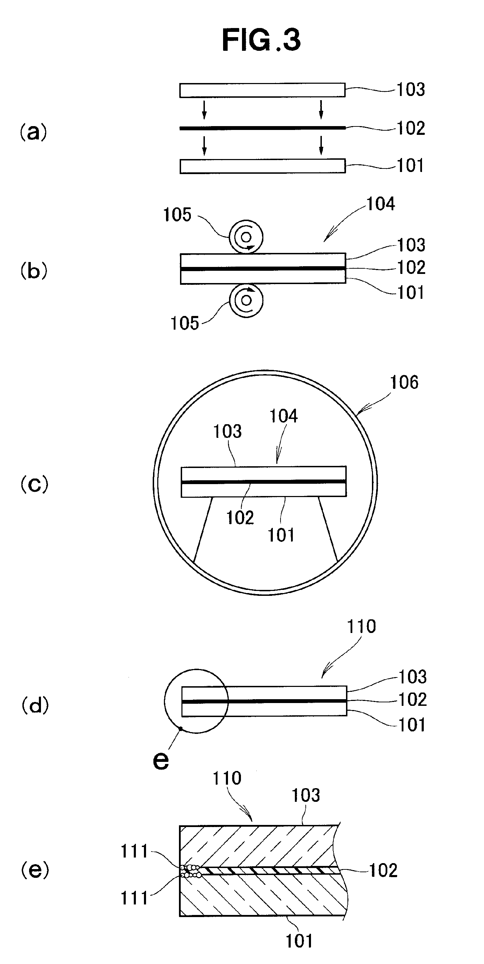

A laminated glass pane wherein at least two sheets of glass are bonded together with an intermediate film interposed therebetween is used as, for example, the windshield of an automobile (for examples, see patent document 1). In a laminated glass pane disclosed in patent document 1, a first sheet of glass and a second sheet of glass are bonded together with an intermediate film interposed therebetween. A conventional process of manufacturing a laminated glass pane having such a configuration will be described with reference to FIG. 3 hereof.

As shown in FIG. 3(a), a polyvinyl butyral layer 102 is laid upon an upper surface of a sheet of glass 101, and a sheet of glass 103 is laid upon an upper surface thereof.

As shown in FIG. 3(b), a laminate 104 manufactured in this way is passed between rollers 105, 105 to remove any air pockets present in the laminate 104.

After being cleared of air pockets, the laminate 104 is conveyed to an autoclave 106 and heated and pressurized, as shown in FIG. 3(c). This bonds the polyvinyl butyral layer 102 to the sheets of glass 101 and 103. The bonding of the polyvinyl butyral layer 102 thus produces a finished piece of laminated glass 110 as shown in FIG. 3(d).

FIG. 3(e) is a magnified view of section (e) of FIG. 3(d). As shown in FIG. 3(e), air bubbles 111 may form in a peripheral area of the laminated glass 110 manufactured as described above after the process of autoclaving is completed, or upon use of the finished glass. One primary cause of such air bubbles 111 is thought to be the penetration of moisture and air present within the autoclave 106 (see FIG. 3(c)) between the sheets of glass 101 and 103 and the polyvinyl butyral layer 102 due to the high pressure within the autoclave 106 during the bonding process.

Normally, such air bubbles 111 can be dispersed by re-autoclaving the glass, or hidden from view by covering the peripheral area of the glass with a mask. In recent years, however, demands for improved product yield have made it desirable to reduce or eliminate any air bubbles remaining in the peripheral area.

### Prior Art Literature

Patent Literature:
Patent document 1: JP 2005-29083 A

### SUMMARY OF INVENTION

### Technical Problem

It is an object of the present invention to provide a laminated glass pane in which the formation of air bubbles in a peripheral area thereof is inhibited.

### Solution to Problem

A first aspect of the present invention provides a method for manufacturing a laminated glass pane wherein at least two sheets of glass are bonded together with an intermediate film interposed therebetween, the method comprising the steps of: layering at least two sheets of glass with a polyvinyl-based intermediate film sandwiched therebetween to produce a laminate; removing air from the resulting laminate; applying a substance having a polyalkylene glycol in the structure thereof to a peripheral surface of the deaired laminate; and placing, in an autoclave, the deaired laminate on which the substance having a polyalkylene glycol in the structure thereof has been applied, and applying heat and pressure to the laminate, thereby bonding the polyvinyl-based intermediate film to the sheets of glass.

Another aspect of the present invention provides a method for manufacturing a laminated glass pane wherein at least two sheets of glass are bonded together with an intermediate film interposed therebetween, the method comprising the steps of: layering at least two sheets of glass with a polyvinyl-based intermediate film sandwiched therebetween to produce a laminate; applying a substance having a polyalkylene glycol in the structure thereof to a peripheral surface of the resulting laminate; removing air from the laminate to which the substance having a polyalkylene glycol in the structure thereof has been applied; and placing, in an autoclave, the deaired laminate on which the substance having a polyalkylene glycol in the structure thereof has been applied, and applying heat and pressure to the laminate, thereby bonding the polyvinyl-based intermediate film to the sheets of glass.

Yet another aspect of the present invention provides a method for manufacturing a laminated glass pane wherein at least two sheets of glass are bonded together with an intermediate film interposed therebetween, the method comprising the steps of: applying a substance having a polyalkylene glycol in the structure thereof to a peripheral surface of a polyvinyl-based intermediate film; sandwiching the polyvinyl-based intermediate film to which the substance having a polyalkylene glycol in the structure thereof has been applied between at least two sheets of glass to produce a laminate; removing air from the resulting laminate; and placing the deaired laminate in an autoclave, and applying heat and pressure to the laminate, thereby bonding the polyvinyl-based intermediate film to the sheets of glass.

### Advantageous Effects of Invention

In the first aspect of the invention, a substance having a polyalkylene glycol in the structure thereof is applied to the peripheral surface of the laminate. The substance having a polyalkylene glycol in the structure thereof slightly dissolves the edges of the intermediate film (polyvinyl-based intermediate film), filling the gaps between the intermediate film and the sheets of glass. The substance may also penetrate the intermediate film, causing the edges of the intermediate film to swell. The swelling of the edges of the intermediate film seals the gaps between the intermediate film and the sheets of glass. As a result, the risk of air or moisture penetrating between the intermediate film and the sheets of glass is reduced, even when the laminate is heated and pressurized. The substance having a polyalkylene glycol in the structure thereof is also believed to have the effect of reducing the amount of contact between the intermediate film and any air or moisture within the autoclave by forming a barrier therebetween. A laminated glass pane in which the formation of air bubbles in the peripheral area thereof is inhibited is thus provided as described above.

In yet another aspect of the invention, a substance having a polyalkylene glycol in the structure thereof is applied to the peripheral surface of the polyvinyl-based intermediate film. The substance having a polyalkylene glycol in the structure thereof slightly dissolves the edges of the intermediate film (polyvinyl-based intermediate film), filling the gaps between the intermediate film and the sheets of glass. The substance may also penetrate the intermediate film, causing the edges of the intermediate film to swell. The swelling of the edges of the intermediate film seals the gaps between the intermediate film and the sheets of glass. As a result, the risk of air or moisture penetrating between the intermediate film and the sheets of glass is reduced, even when the laminate is heated and pressurized. The substance having a polyalkylene glycol in the structure thereof is also believed to have the effect of reducing the amount of contact between the intermediate film and any air or moisture within the autoclave by forming a barrier therebetween. A laminated glass pane in which the formation of air bubbles in the peripheral area thereof is inhibited is thus provided as described above.

### BRIEF DESCRIPTION OF DRAWINGS

FIG. 1 illustrates a method for manufacturing a laminated glass pane according to an embodiment of the present invention;
FIG. 2 is a partial cross-sectional view illustrating a laminated glass pane manufactured in accordance with the method of FIG. 1; and
FIG. 3 is an illustration of a conventional method for manufacturing a laminated glass pane.

### DESCRIPTION OF EMBODIMENTS

Certain embodiments of the present invention will be described below with reference to the accompanying drawings.

### [Embodiments]

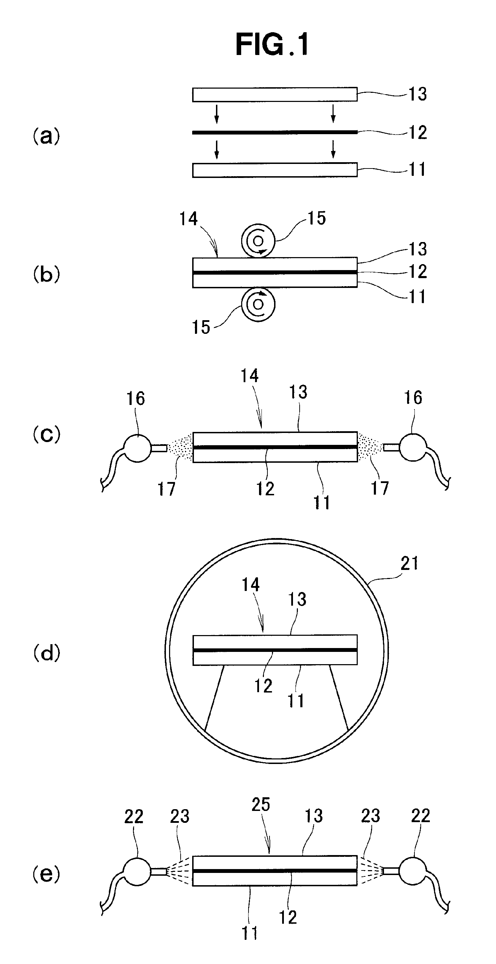

As shown in FIG. 1(a), a polyvinyl butyral layer 12 is laid upon an upper surface of a sheet of glass 11 as a polyvinyl-based intermediate film, and a sheet of glass 13 is laid upon an upper surface thereof. The polyvinyl-based intermediate film includes polyvinyl alcohol. In other words, the polyvinyl-based intermediate film is not limited to the ones described herein.

As shown in FIG. 1(b), a laminate 14 manufactured as in FIG. 1(a) is passed between rollers 15, 15 to remove any air pockets present in the laminate 14. The polyvinyl butyral layer 12 is temporarily bonded to the sheets of glass 11 and 13 by the pressure of the two rollers 15, 15.

As shown in FIG. 1(c), after the air has been removed from the laminate 14, robots 16, 16 apply a substance having a polyalkylene glycol in the structure thereof 17, 17 to the peripheral surface thereof.

Examples of the substance having a polyalkylene glycol in the structure thereof include polyethylene glycol, polypropylene glycol, polyalkylene glycol monobutyl ether, polyalkylene glycol monoethyl ether, polyoxyethylene alkyl ether, polyoxyethylene alkyl phenyl ether, various carbonate esters, and various higher fatty acid esters.

As shown in FIG. 1(d), the laminate 14 to which the substance having a polyalkylene glycol in the structure thereof 17 has been applied is conveyed to an autoclave 21, and heated and pressurized. As shown in FIG. 1(e), this bonds the sheets of glass 11 and 13 and the polyvinyl butyral layer 12, producing a finished laminated glass 25.

It is also possible to apply the substance having a polyalkylene glycol in the structure thereof 17 to the peripheral surface of the polyvinyl butyral layer 12 prior to performing the step of FIG. 1(a) (the layering step). Additionally, it is possible to perform the step of FIG. 1(b) (the air removing step) after performing the step of FIG. 1(c) (the coating applying step). The order in which these steps are performed may be selected as desired.

A layer removing step may be performed as necessary. Specifically, robots 22, 22 spray the peripheral surface of the laminated glass 25 with water 23, 23 as shown in FIG. 1(e). The sprayed water removes the water soluble substance having a polyalkylene glycol in the structure thereof 17 (see FIG. 1(c)).

If the layer removing step is performed, the following effects can be obtained.

The substance having a polyalkylene glycol in the structure thereof 17 (see FIG. 1(c)) is water soluble. For this reason, the substance having a polyalkylene glycol in the structure thereof can be easily washed off with water after the laminate 14 is heated and pressurized. The layer removing step can be performed in a short period of time, enabling an improvement in manufacturing efficiency.

Another plasticizer, tripropylene glycol methyl ether, or the like may be added to the substance having a polyalkylene glycol in the structure thereof to improve cleaning efficiency. In other words, the substance having a polyalkylene glycol in the structure thereof also includes substances containing other plasticizers.

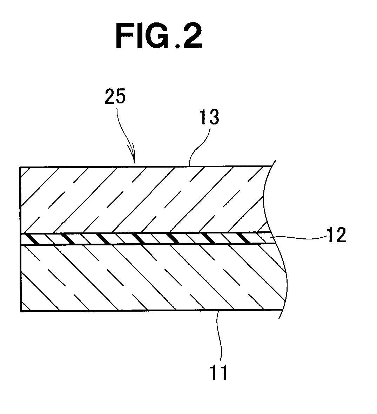

As shown in FIG. 2, the formation of air bubbles due to air or moisture between the sheets of glass 11 and 13 and the polyvinyl butyral layer 12 of the laminated glass 25 is inhibited. An experiment was performed in order to confirm that air bubble formation around the peripheral surface in particular of the laminated glass 25 was inhibited.

### (Experiments)

An experiment according to the present invention will be described below. However, the present invention is not limited to this experiment.

An experiment according to the present invention is described in Table 1.

**[Table 1]**

| Exp. No. | Conditions | Results | | Rating |
|---|---|---|---|---|
| | Protective Layer | Fail rate (%) | Protective layer removability | |
| 1 | None | 8 | N/A | × |
| 2 | Tripropylene glycol methyl ether | 5 | O | × |
| 3 | Polyalkylene glycol monobutyl ether | 0.2 | Δ | O |
| 4 | Polyalkylene glycol monobutyl ether + tripropylene glycol methyl ether | 0.4 | O | O |
| 5 | Propylene glycol | 0.8 | Δ | O |
| 6 | Polyalkylene glycol monoethyl ether | 0.5 | Δ | O |

In experiment 1, polyvinyl butyral was used as the intermediate film between the sheets of glass. Layering, air removal, and bonding were performed upon these materials as shown in FIG 3 to obtain a piece of laminated glass.

In experiment 1, a protective layer such as that shown in FIG. 1(c) was not formed.

1,000 sheets of laminated glass were manufactured under these conditions. The manufactured laminated glass was inspected to confirm whether air bubbles had formed beyond the allowable limit on the peripheral surface of the glass. Pieces of glass in which air bubbles had formed beyond the allowable limit were given a rating of "fail".

Of the laminated glass according to experiment 1, laminated glass in whose peripheral surface bubbles were formed beyond the allowable limit constituted 8% of the whole. In other words, the fail rate was 8%. Because the fail rate for experiment 1 was greater than 1%, a rating of "fail" was given. It is believed that the laminated glass of experiment 1 readily allowed air and water to penetrate the peripheral surface thereof.

In experiment 2, polyvinyl butyral was used as the intermediate film between the sheets of glass. This material was processed as shown in FIG. 1 to obtain a piece of laminated glass.

After the layering and air removing steps were performed, tripropylene glycol methyl ether was applied to the peripheral surface of the laminate as a protective layer. Afterwards, bonding was performed in an autoclave, and the protective layer was washed away to obtain a piece of laminated glass.

The fail rate for the laminated glass of experiment 2 manufactured under these conditions was 5%. Because the fail rate for experiment 2 was greater than 1%, a rating of "fail" was given. It is believed that the laminated glass of experiment 2 readily allowed air and water to penetrate the peripheral surface thereof. However, the protective layer was easily washed away.

In experiment 3, polyvinyl butyral was used as the intermediate film between the sheets of glass. This material was processed as shown in FIG. 1 to obtain a piece of laminated glass.

After the layering and air removing steps were performed, polyalkylene glycol monobutyl ether was applied to the peripheral surface of the laminate as a protective layer. Afterwards, bonding was performed in an autoclave, and the protective layer was washed away to obtain a piece of laminated glass.

The fail rate for the laminated glass of experiment 3 manufactured under these conditions was 0.2%. The fail rate in experiment 3 was equal to or less than 1%. The protective layer was also successfully washed away with water. The laminated glass of experiment 3 had no points of failure, and was thus given a rating of "pass."

It is thought that applying polyalkylene glycol monobutyl ether as the protective layer prevented much air or moisture from penetrating between the sheets of glass and the polyvinyl butyral layer. The reason for this will be explained with reference to FIG. 1.

The substance having a polyalkylene glycol in the structure thereof (polyalkylene glycol monobutyl ether) 17 slightly dissolves the edge of the intermediate film (polyvinyl butyral layer) 12, filling the gaps between the intermediate film 12 and the sheets of glass 11 and 13. The substance also penetrates the intermediate film 12 causing the edges of the intermediate film 12 to swell. The swelling of the edges of the intermediate film 12 seals the gaps between the intermediate film 12 and the sheets of glass 11 and 13. The substance having a polyalkylene glycol in the structure thereof 17 is also believed to have the effect of reducing the amount of contact between the intermediate film and any air or moisture within the autoclave by forming a barrier therebetween. As a result, the risk of air or moisture penetrating between the intermediate film 12 and the sheets of glass 11 and 13 is reduced, even when the laminate 14 is heated and pressurized (see FIG. 1(d)). A laminated glass in which the formation of air bubbles in the peripheral area thereof is inhibited is thus provided as described above.

Based on these observations, experiments 4 through 6 were conducted.

In experiment 4, polyvinyl butyral was used as the intermediate film between the sheets of glass. This material was processed as shown in FIG. 1 to obtain a piece of laminated glass.

After the layering and air removal steps were performed, polyalkylene glycol monobutyl mixed with tripropylene glycol methyl ether was applied to the peripheral surface of the lamination as a protective layer. Afterwards, bonding was performed in an autoclave, and the protective layer was washed away to obtain a piece of laminated glass.

The fail rate for the laminated glass of experiment 4 manufactured under these conditions was 0.4%. The fail rate in experiment 4 was equal to or less than 1%. The protective layer was also easily washed away with water. The laminated glass of experiment 4 had no points of failure, and was thus given a rating of "pass."

In experiment 5, polyvinyl butyral was used as the intermediate film between the sheets of glass. This material was processed as shown in FIG. 1 to obtain a piece of laminated glass.

After the layering and air removing steps were performed, propylene glycol was applied to the peripheral surface of the laminate as a protective layer. Afterwards, bonding was performed in an autoclave, and the protective layer was washed away to obtain a piece of laminated glass.

The fail rate for the laminated glass of experiment 5 manufactured under these conditions was 0.8%. The fail rate in experiment 5 was equal to or less than 1%. The protective layer was also successfully washed away with water. The laminated glass of experiment 5 had no points of failure, and was thus given a rating of "pass".

In experiment 6, polyvinyl butyral was used as the intermediate film between the sheets of glass. This material was processed as shown in FIG. 1 to obtain a piece of laminated glass.

After the layering and air removing steps were performed, polyalkylene glycol monoethyl ether was applied to the peripheral surface of the laminate as a protective layer. Afterwards, bonding was performed in an autoclave, and the protective layer was washed away to obtain a piece of laminated glass.

The fail rate for the laminated glass of experiment 6 manufactured under these conditions was 0.5%. The fail rate in experiment 6 was equal to or less than 1%. The protective layer was also successfully washed away with water. The laminated glass of experiment 6 had no points of failure, and was thus given a rating of "pass".

An experiment was performed in order to distinguish the laminated glass manufactured according to the method of the present invention and a laminated glass manufactured according to a method other than that of the present invention.

The experiment is described in Table 2.

**[Table 2]**

| Exp. No. | Conditions | | Results | | | | | | | |
|---|---|---|---|---|---|---|---|---|---|---|
| | Protective layer | Washing step | C₂H₅0 | C₅Hg₉O | C₄H₇0₂ | C₄Hg₉0₂ | C₅H₉0₂ | C₆H₁₃0 | C₅H₁₁0₂ | CH₂ |
| 7 | None | N/A | X | X | X | X | X | X | X | X |
| 8 | Polyalkylene glycol monobutyl ether | No | O | O | O | O | O | O | O | O |
| 9 | | Yes | O | O | O | O | O | O | O | O |

In experiment 7, a piece of laminated glass was manufactured under the same conditions as in experiment 1.

In the experiment, polyvinyl butyral was used as the intermediate film between the sheets of glass. Layering, air removal, and bonding were performed upon this material as shown in FIGS. 3(a) through 3(c) to obtain a piece of laminated glass.

In experiment 1, a protective layer such as that shown in FIG. 1(c) was not formed. Because no protective layer was formed, no washing off of the protective layer was performed.

The surface components of the laminated glass manufactured were thus analyzed. The conditions under which the analysis was performed were as follows. These conditions were the same for experiments 7 through 9.

### Analysis conditions

Analysis device: time-of-flight secondary ion mass spectrometer
Product name: TRIFT-IV, manufactured by ULVAC-PHI, Inc.
Primary ion source: Au⁺ (30 keV)
Primary ion current: 1.5 to 1.6 nA
Electrostatic neutralization: Yes
Measurement field: 100×100 µm²
Measurement mode: positive secondary ion
Secondary ion measurement range: 0.5-2000 amu
Measurement time: 1.5-15 mins

In experiment 7, performed under these conditions, C₂H₅O, C₅H₉O, C₄H₇O₂, C₄H₉O₂, C₅H₉O₂, C₆H₁₃O, C₅H₁₁O₂, and CH₂ (secondary ions with mass number > 35 at spacing 14 amu (CH₂); likewise below) were not detected as secondary ions. In other words, in experiment 7, in which a piece of laminated glass was manufactured according to a method other than that of the present invention, the specified secondary ions were not detected.

In experiment 8, polyvinyl butyral was used as the intermediate film between the sheets of glass. Layering, air removal, coating, and bonding were performed upon these materials as shown in FIGS. 1(a) through 1(d). Polyalkylene glycol monobutyl ether was used as the protective layer, and the washing step was not performed.

The surface components of the laminated glass manufactured in experiment 8 under these conditions were analyzed.

In experiment 8, C₂H₅O, C₅H₉O, C₄H₇O₂, C₄H₉O₂, C₅H₉O₂, C₆H₁₃O, C₅H₁₁O₂, and CH₂ were detected as secondary ions. In other words, in experiment 8, in which a piece of laminated glass was manufactured according to the method of the present invention, the specified secondary ions were detected.

In experiment 9, polyvinyl butyral was used as the intermediate film between the sheets of glass. Layering, air removal, coating, and bonding were performed upon these materials as shown in FIGS. 1(a) through 1(e), and washing was performed at the end. Polyalkylene glycol monobutyl ether was used as the protective layer.

The surface components of the laminated glass manufactured in experiment 9 under these conditions were analyzed.

In experiment 9, C₂H₅O, C₅H₉O, C₄H₇O₂, C₄H₉O₂, C₅H₉O₂, C₆H₁₃O, C₅H₁₁O₂, and CH₂ were detected as secondary ions. In other words, in experiment 9, in which a piece of laminated glass was manufactured according to the method of the present invention, the specified secondary ions were detected.

The windshield of an automobile was mentioned as an example of the laminated glass according to the present invention, but the present invention is not limited to this; it may be used for windows for other parts of automobiles, architectural window glass, and the like.

### INDUSTRIAL APPLICABILITY

The method for manufacturing laminated glass according to the present invention is advantageous for manufacturing automobile windshields.

### REERENCE SIGNS LIST

- 11, 13: SHEET OF GLASS
- 12: POLYVINYL BUTYRAL LAYER
- 14: LAMINATE
- 17: SUBSTANCE HAVING A POLYALKYLENE GLYCOL IN THE STRUCTURE THEREOF
- 25: LAMINATED GLASS

## Claims

1. A method for manufacturing a laminated glass pane having at least two sheets of glass bonded together with an intermediate film interposed therebetween, the method comprising the steps of:
layering at least two sheets of glass with a polyvinyl-based intermediate film sandwiched therebetween to produce a laminate;
removing air from the produced laminate;
applying a substance, having a polyalkylene glycol in a structure thereof, to a peripheral surface of the deaired laminate; and
placing, in an autoclave, the deaired laminate on which the substance having a polyalkylene glycol in the structure thereof has been applied, and applying heat and pressure to the laminate to thereby bond the polyvinyl-based intermediate film to the sheets of glass.

2. A method for manufacturing a laminated glass pane having at least two sheets of glass bonded together with an intermediate film interposed therebetween, the method comprising the steps of:
layering at least two sheets of glass with a polyvinyl-based intermediate film sandwiched therebetween to produce a laminate;
applying a substance having a polyalkylene glycol in a structure thereof to a peripheral surface of the resulting laminate;
removing air from the laminate to which the substance having a polyalkylene glycol in the structure thereof has been applied; and
placing, in an autoclave, the deaired laminate on which the substance having a polyalkylene glycol in the structure thereof has been applied, and applying heat and pressure to the laminate to thereby bond the polyvinyl-based intermediate film to the sheets of glass.

3. A method for manufacturing a laminated glass pane having at least two sheets of glass are bonded together with an intermediate film interposed therebetween, the method comprising the steps of:
applying a substance having a polyalkylene glycol in the structure thereof to a peripheral surface of a polyvinyl-based intermediate film;
sandwiching the polyvinyl-based intermediate film to which the substance having a polyalkylene glycol in the structure thereof has been applied between at least two sheets of glass to produce a laminate;
removing air from the resulting laminate; and
placing the deaired laminate in an autoclave, and applying heat and pressure to the laminate to thereby bond the polyvinyl-based intermediate film to the sheets of glass.
